# EUROPEAN PATENT APPLICATION

(11) **EP 2 665 308 A1**
(43) Date of publication of application: **20.11.2013**
(21) Application number: 12803153.1
(22) Date of filing: 25.06.2012
(51) Int. Cl.: H04W 36/08

(54) **METHOD APPARATUS AND SYSTEM FOR HANDOVER BETWEEN H(E)NBS**

(30) Priority: 24.06.2011 CN 201110173475
(71) Applicant: Huawei Device Co., Ltd., Shenzhen, Guangdong 518129 (CN)
(72) Inventor: GUAN, Zhi, Shenzhen Guangdong 518129 (CN); GAO, Chenliang, Shenzhen Guangdong 518129 (CN)
(74) Representative: Goddar, Heinz J.
(86) International application number: PCT/CN2012/077453
(87) International publication number: WO 2012/175053

(57) **Abstract**

The present invention discloses a method, an apparatus, and a system for performing a handover between home base stations. The method includes: receiving a handover request for a handover to a target home base station, where the handover request is sent by a source home base station; judging whether the source home base station and the target home base station are in a same local network; if yes, sending connection establishment related information of an L-GW connected to the target home base station to the target home base station; and after sending the connection establishment related information of the L-GW connected to the target home base station to the target home base station, receiving connection establishment related information which is of the target home base station and sent by the target home base station, sending the connection establishment related information of the target home base station to the L-GW connected to the target home base station, and establishing a user-plane tunnel between the target home base station and the connected L-GW. Through the present invention, continuity of an LIPA IP data session can be implemented when a terminal is handed over between different home base stations in the same local network.

## Description

### CROSS-REFERENCE TO RELATED APPLICATIONS

This application claims priority to Chinese Patent Application No. 201110173475.7, filed with the Chinese Patent Office on June 24, 2011, and entitled "METHOD, APPARATUS, AND SYSTEM FOR PERFORMING HANDOVER BETWEEN HOME BASE STATIONS", which is incorporated herein by reference in its entirety.

### TECHNICAL FIELD

The present invention relates to the field of local IP service technologies, and in particular, to a method, an apparatus, and a system for performing a handover between home base stations.

### BACKGROUND

An H(e)NB is short for a home base station (Home NodeB, HNB) and a home evolved base station (Home evolved NodeB, HeNB), which are generally called a home base station. The home base station is a small base station and has a same function as a macro base station. If an H(e)NB is deployed in a communication system, a user of the H(e)NB not only may use a core network service of a mobile operator but also may contact another node in a home network, so as to share resources in the home network or directly access the Internet through the home base station.

Local IP access (Local IP Access, LIPA) refers to a service that a terminal is connected to a device in a home/an enterprise network through an H(e)NB, so as to share home network resources.

Selected IP traffic offload (Selcted IP Traffice Offload, SIPTO) means that an IP service data stream of a user is directly routed out through an H(e)NB to obtain an Internet service without passing through a core network of an operator, which may reduce a load and a transmission cost of the core network relative to direct access from the core network of the operator.

Initially, a home base station is generally only used in a home environment, and because an area that needs to be covered is small, only one H(e)NB is generally deployed in one family. When a member in the family performs a local IP service in the area covered by the H(e)NB, the service may be performed through the H(e)NB and a local gateway (Local-Gateway, L-GW); and when a UE moves out of the coverage area of the H(e)NB, the local IP service is disconnected.

In a 3GPP R11 version, architecture in which a home base station is used in an enterprise or another environment is introduced. Compared with using a home base station in a home environment, because an area that needs to be covered is large, multiple H(e)NBs may need to be deployed. For example, multiple H(e)NBs are deployed in different office areas in a same enterprise, so as to form an enterprise network. In this case, if a user moves out of the enterprise network, a local IP service may also be disconnected; however, if the user only moves between coverage areas of different H(e)NBs in a same enterprise network, a problem of how to ensure continuity of the local IP service exists. For the problem, the prior art has not yet given a corresponding solution.

### SUMMARY

The present invention provides a method, an apparatus, and a system for performing a handover between home base stations, which can implement continuity of an LIPA IP data session when a terminal is handed over between different home base stations in a same local network.

The present invention provides the following solutions:

A method for performing a handover between home base stations includes:
receiving a handover request for a handover to a target home base station, where the handover request is sent by a source home base station;
determining whether the source home base station and the target home base station are in a same local network;
if yes, sending, to the target home base station, connection establishment related information of an L-GW to which the target home base station connects; and
after sending, to the target home base station, the connection establishment related information of the L-GW to which the target home base station connects, receiving connection establishment related information of the target home base station sent by the target home base station, sending the connection establishment related information of the target home base station to the L-GW to which the target home base station connects, and establishing a user-plane tunnel between the target home base station and the connected L-GW.

An apparatus for performing a handover between home base stations includes:
a handover request receiving unit, configured to receive a handover request for a handover to a target home base station, where the handover request is sent by a source home base station;
a determining unit, configured to determine whether the source home base station and the target home base station are in a same local network;
a sending unit, configured to: if a judgment result of the determining unit is yes, send, to the target home base station, connection establishment related information of an L-GW to which the target home base station connects; and
a notifying unit, configured to: after the connection establishment related information of the L-GW to which the target home base station connects is sent to the target home base station, receive connection establishment related information of the target home base station sent by the target home base station, send the connection establishment related information of the target home base station to the L-GW to which the target home base station connects, and establish a user-plane tunnel between the target home base station and the connected L-GW.
A system for performing a handover between home base stations includes at least two home base stations, at least one local gateway L-GW, and a mobility management entity MME/serving GPRS support node SGSN, where
the MME/SGSN includes the foregoing apparatus for performing a handover between home base stations.

A system for performing a handover between home base stations includes at least two home base stations, at least one local gateway L-GW, a local home base station gateway, and a mobility management entity MME/serving GPRS support node SGSN, where
the local home base station gateway includes:
   an IP address allocating unit, configured to: when a request for establishing a local IP service connection for a terminal is received, allocate an IP address to the terminal; and
   the foregoing apparatus for performing a handover between home base stations.

According to the specific embodiments provided by the present invention, the present invention can implement the following technical effects:

In the embodiments of the present invention, after the handover request sent by the source home base station is received, whether the source home base station and the target home base station are in the same local network is determined, and if yes, mutual discovery of the target home base station and the connected local gateway may be implemented, that is, the target home base station and the connected local gateway can know the connection establishment related information of each other, so that the user-plane tunnel may be established between the target home base station and the connected local gateway, and then local IP access of the terminal is completed by directly using the established user-plane tunnel, so as to ensure the continuity of the LIPA IP data session in the handover process.

### BRIEF DESCRIPTION OF DRAWINGS

To describe the technical solutions in the embodiments of the present invention or in the prior art more clearly, the following briefly introduces accompanying drawings required for describing the embodiments. Apparently, the accompanying drawings in the following description show merely some embodiments of the present invention, and persons of ordinary skill in the art may further obtain other drawings according to these accompanying drawings without creative efforts.
FIG 1-1, FIG. 1-2, and FIG. 1-3 are schematic architecture diagrams of local networks;
FIG. 2 is a flow chart of a method according to an embodiment of the present invention;
FIG 3 is a flow chart of a method in an actual application according to an embodiment of the present invention;
FIG 4 is another flow chart of a method in an actual application according to an embodiment of the present invention;
FIG 5 is a schematic architecture diagram of a transformed network according to an embodiment of the present invention;
FIG 6 is still another flow chart of a method in an actual application according to an embodiment of the present invention;
FIG 7 is a schematic diagram of an apparatus according to an embodiment of the present invention;
FIG 8 is a schematic diagram of a system according to an embodiment of the present invention; and
FIG 9 is a schematic diagram of another system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention shall fall within the protection scope of the present invention.

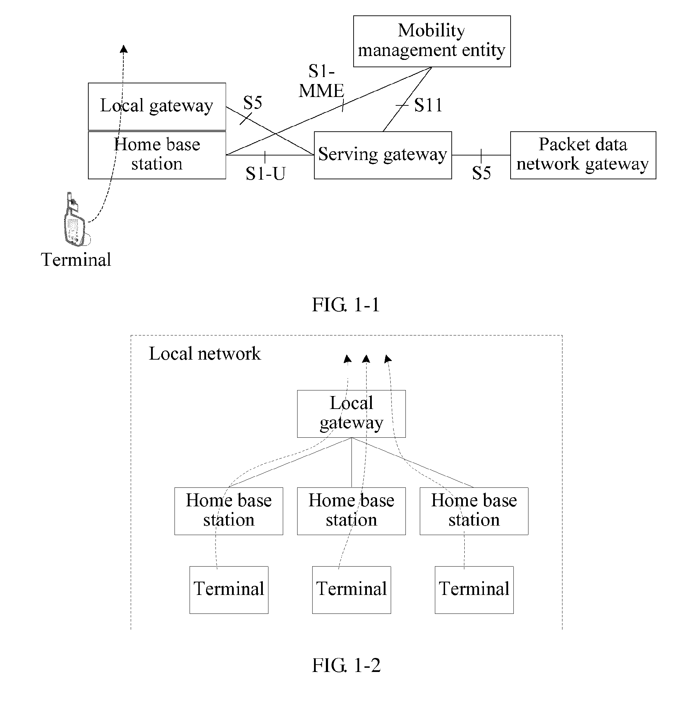

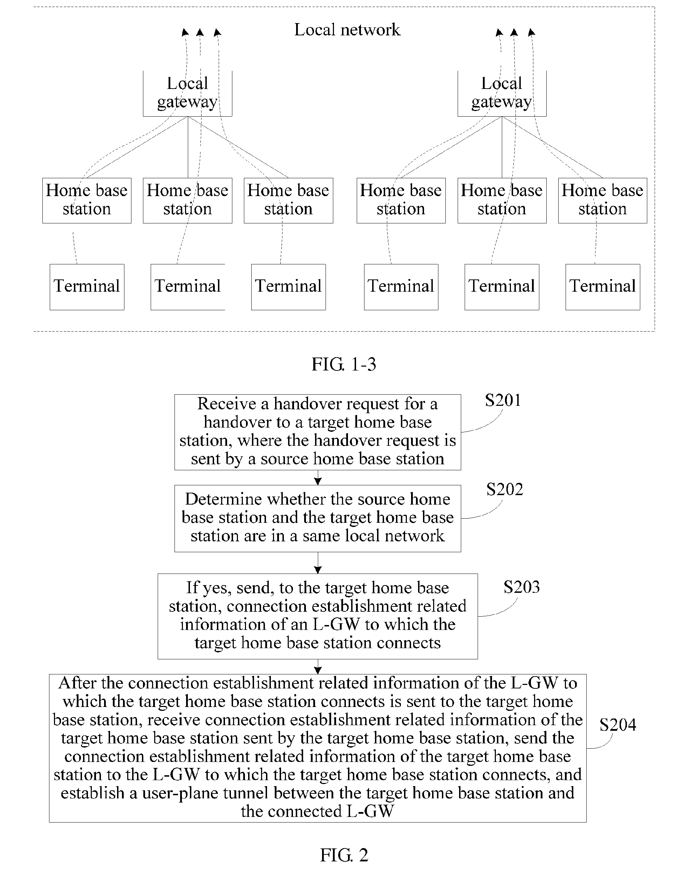

For convenience of understanding, architecture of a local network is first briefly introduced in the following. Referring to FIG. 1-1, in a case that only one H(e)NB is deployed, when a local IP service is performed, the following several network entities are mainly involved: an H(e)NB, a local gateway (Local-Gateway, L-GW), a serving gateway (Serving Gateway, S-GW), a packet data network gateway (Packet Data Network Gateway, P-GW), and a mobility management entity (Mobility Management Entity, MME). If intending to be connected to an external network through a core network of an operator, a terminal in the local network may be connected to the external network through a link: H(e)NB->S-GW->P-GW, and in this case, the P-GW needs to perform an operation such as allocating an IP address to a UE; and if intending to perform a local IP service, the terminal may be directly connected to a local area network or the external network through H(e)NB->L-GW, and in this case, the L-GW allocates an IP address to the UE. It can be seen that, the L-GW has a function similar to that of the P-GW.

In an environment such as an enterprise, multiple H(e)NBs may be deployed. Referring to FIG. 1-2, other network elements are the same as those in FIG. 1-1. Therefore, FIG. 1-2 only shows a part different from FIG. 1-1. It can be seen that, multiple H(e)NBs may correspond to a same L-GW. In this case, each terminal may implement a local IP service through different H(e)NBs; however, no matter which H(e)NB through which the local IP service is implemented, the same L-GW allocates an IP address to the terminal.

In addition, in an environment such as large and medium-sized enterprises, because the number of deployed H(e)NBs may be large, multiple L-GWs may also be deployed according to an actual requirement. In this case, each L-GW is connected to a fixed number of H(e)NBs, so as to jointly form a local network in the enterprise. Referring to FIG. 1-3, a case that two L-GWs are deployed is shown, and each L-GW corresponds to three H(e)NBs. Similarly, each terminal may implement a local IP service through different H(e)NBs, and what is different from a case that only one L-GW is deployed is that, when a terminal performs a local IP service through a certain H(e)NB, an L-GW corresponding to the H(e)NB allocates an IP address to the terminal. For example, for a case in FIG. 1-3, when a terminal performs local IP access through an H(e)NB1, an H(e)NB2, or an H(e)NB3, an L-GW1 allocates an IP address to the terminal, and when a terminal performs a local IP service through an H(e)NB4, an H(e)NB5, or an H(e)NB 6, an L-GW2 allocates an IP address to the terminal.

It should be noted that, in an EPS (Evolved Packet System, evolved packet system) network, the mobility management entity MME is used as a mobility management and session management entity and processes signaling between network elements, and the serving gateway SGW is used as an anchor point of user-plane data and is responsible for buffering and forwarding packet data. In a UMTS (Universal Mobile Telecommunications System, universal mobile telecommunications system)/GPRS (General Packet Radio Service, general packet radio service technology) network, a serving GPRS support node SGSN is used as a mobility management and session management entity and processes signaling between network elements, and meanwhile, the SGSN also has functions for buffering and forwarding packet data. In the EPS network, a packet data network gateway PGW and a GPRS gateway support node GGSN in the UMTS/GPRS network have the same function, are both used as an interface gateway of a mobile network and an external network and are responsible for allocating an IP address to a terminal UE and forwarding packet data. In the embodiment of the present invention, an MME in the foregoing network architecture may also be an SGSN, and for convenience of description, a name of a corresponding network element is written as an MME/SGSN, which means that, in the EPS network, the network element is the MME, and in the UMTS/GPRS network, the network element is the SGSN.

An embodiment of the present invention provides a corresponding solution for how to ensure continuity of a local IP service in a process in which a terminal moves in a same local network in the foregoing case that multiple H(e)NBs exist in the same local network, which is described in detail in the following.

Referring to FIG. 2, a method for performing a handover between home base stations according to an embodiment of the present invention includes the following steps:
S201: Receive a handover request for a handover to a target home base station, where the handover request is sent by a source home base station (H(e)NB).

First, it should be noted that, in the embodiment of the present invention, the handover means that, after a UE establishes a PDN connection of a local IP service through a certain H(e)NB, if the UE moves to an coverage area of another H(e)NB, the UE may be handed over to the another H(e)NB, and the H(e)NB provides the local IP service for the UE.

S202: Determine whether the source home base station and the target home base station are in a same local network.

Because a resource in a local network is generally private, that is, only when moving in the same local network, the UE can perform local IP access. Therefore, after the handover request sent by the source H(e)NB is received, it should be first determined whether the UE moves in the same local network; if yes, the handover of the local IP service is supported; otherwise, the local IP service of the UE may be directly disconnected.

To this end, in the embodiment of the present invention, it may be determined whether the UE moves in the same local network by determining whether the source H(e)NB and the target H(e)NB are in the same local network. That is to say, if the source H(e)NB and the target H(e)NB are in the same local network, it may be proved that the UE moves in the same local network.

During specific implementation, there are multiple specific methods for determining that the source H(e)NB and the target H(e)NB are in the same local network. For example, a method may be that CSG (Closed Subscriber Group, closed subscriber group) IDs of the source H(e)NB and the target H(e)NB are used to perform the judgment. For convenience of understanding, concepts of a CSG and a CSG ID are first briefly introduced in the following.

An H(e)NB adopts a CSG technology to perform access control. A CSG refers to a group of subscribers, a cell covered by an H(e)NB is a CSG cell, and one CSG ID may correspond to multiple H(e)NBs; however, one H(e)NB only corresponds to a unique CSG ID. Different CSGs are identified by CSG IDs. One CSG may correspond to multiple H(e)NBs in a same local network, and in this case, multiple H(e)NBs may share one CSG ID. There may be one or more CSGs (for example, which may be divided according to different departments in an enterprise) in the same local network. A UE may locally (such as in an SIM card) store an ID of a CSG to which the UE belongs, and meanwhile, an H(e)NB may also broadcast its own CSG ID on a wireless port. For some special services (for example, some data that only can be transmitted by members in a department to each other), only UEs of subscribers in a same CSG group may be allowed to access a CSG cell corresponding to the CSG ID, and on the contrary, UEs of subscribers outside the group cannot access each CSG cell corresponding to the CSG ID. Definitely, if some conventional services are performed, all resources in the same local network may be used by all UEs in the network, that is, a UE may perform local IP access through any H(e)NB in the network.

According to the foregoing features of the CSG and the CSG ID, in the embodiment of the present invention, all CSG IDs in the same local network may be formed into a CSG ID list in advance. When sending a handover request to an MME/SGSN, the source H(e)NB may send a CSG ID of the target H(e)NB to the MME/SGSN (for example, the CSG ID may be carried in a handover request message). In this way, the MME/SGSN may determine whether a CSG ID of the source H(e)NB and the CSG ID of the target H(e)NB are in a same CSG ID list, if yes, determine that the source H(e)NB and the target H(e)NB are in the same local network. Because the source H(e)NB is a base station currently serving the UE, the MME/SGSN already knows the CSG ID of the source H(e)NB in a previous process of establishing a connection between the UE and the source H(e)NB (for example, in the process of establishing the connection between the UE and the source H(e)NB, the UE may carry the CSG ID of the source H(e)NB in an uplink NAS (Non-Access Stratum, non-access stratum transmission) message, and then, the source H(e)NB may send its own H(e)NB to the MME/SGSN). Definitely, because the "source" and the "target" in the network are only relative concepts, and a base station currently used as the source base station may previously perform a handover as a target base station, the MME/SGSN may also obtain the CSG ID of the source base station from a handover request of the source home base station that is used as a target base station. In short, before knowing the CSG ID of the target H(e)NB from the handover request sent by the source H(e)NB, the MME/SGSN already knows the CSG ID of the source H(e)NB; therefore, after receiving the handover request sent by the source H(e)NB, the MME/SGSN directly compares the previously known CSG ID of the source H(e)NB with the CSG ID of the target H(e)NB.

During specific implementation, a CSG ID list of each local network may be directly saved in the MME/SGSN, and in this case, the MME/SGSN may directly query a locally saved list, so as to perform the judgment. Alternatively, in other embodiments, a CSG ID list of each local network may also be saved in an HSS (Home Subscriber Server, home subscriber subscription server), and in this case, the MME/SGSN may complete a judgment process by interacting with the HSS. For example, the MME/SGSN obtains CSG ID lists of local networks from the HSS and determines whether the CSG ID of the source H(e)NB and the CSG ID of the target H(e)NB are in a CSG ID list of the same local network, and if the two are in the CSG ID list of the same local network, it may be determined that the source H(e)NB and the target H(e)NB are in the same local network.

It should be noted that, in some existing standards, a local network may be defined as follows: A local network is formed of a group of H(e)NBs that perform local IP access through one or more L-GWs, and session continuity of an LIPA IP data session is kept when a terminal moves between different H(e)NBs in a same local network. That is to say, no matter how many groups and how many L-GWs exist in a network, as long as the session continuity of the LIPA IP data session needs to be kept when the terminal moves in a certain range, networks in the range are the same local network. In this case, different local networks may be differentiated by local network identifiers, and H(e)NBs in the same local network may be differentiated by home base station identifiers.

In this way, when whether the source H(e)NB and the target H(e)NB belong to the same local network needs to be determined, the MME/SGSN may compare a local network identifier of a local network where the source H(e)NB is located with a local network identifier of a local network where the target H(e)NB is located, and if the two are the same, may determine that the source H(e)NB and the target H(e)NB are in the same local network. Each H(e)NB can know its own local network identifier; however, the source H(e)NB may not know a local network identifier of the target H(e)NB when sending the handover request. Therefore, in this case, the source H(e)NB may carry its own local network identifier when sending the handover request, so that the MME/SGSN can know the local network identifier of the source H(e)NB from the handover request.

The MME/SGSN may obtain the local network identifier of the target H(e)NB in multiple manners. For example, in one manner, because a local network identifier of each H(e)NB may generally be saved in a DNS domain name server, the MME/SGSN may initiate a query request to the DNS domain name server after receiving the handover request of the source H(e)NB, so as to know the local network identifier of the target H(e)NB. In another manner, the target H(e)NB may currently has a connection relationship with another UE, and in a previous process of establishing a connection between another UE and the target H(e)NB, the local network identifier of the target H(e)NB may also be obtained. For example, in a process of establishing a connection between a certain UE and an H(e)NB currently used as the target H(e)NB, the UE may carry a local network identifier of the H(e)NB in an uplink NAS message, and then the H(e)NB may send its own local network identifier to the MME/SGSN, and in this case, the MME/SGSN may know the local network identifier of the H(e)NB accordingly. Furthermore, an identifier list of home base stations and local networks may be further locally saved in the MME/SGSN or in the HSS. In this way, the MME/SGSN may obtain the local network identifier of the target H(e)NB by querying the local network identifier list. In addition, because an S1 interface exists between the H(e)NB and the MME/SGSN, and the H(e)NB may send an S1 application protocol S1 AP message to the MME/SGSN through the S 1 interface, the target H(e)NB may carry its own local network identifier in the SIAP message, so that the MME/SGSN may obtain the local network identifier of the target H(e)NB when receiving the SIAP message. Definitely, the target H(e)NB may once initiate a handover request as a source H(e)NB and carry its own local network identifier in the handover request; therefore, the local network identifier of the target H(e)NB may also be obtained from the handover request initiated by the target H(e)NB as a source H(e)NB.

Besides the foregoing manners for determining whether the source H(e)NB and the target H(e)NB belong to the same local network, an identifier of each H(e)NB in the same local network may be further pre-organized together, so as to form multiple H(e)NB identifier lists for local networks. In an H(e)NB identifier list of a certain local network, an identifier of each H(e)NB in the local network is recorded. In this way, when whether the source H(e)NB and the target H(e)NB belong to the same local network needs to be determined, the MME/SGSN may determine whether an identifier of the source H(e)NB and an identifier of the target H(e)NB are in an H(e)NB identifier list of a same local network, and if yes, may determine that the source H(e)NB and the target H(e)NB are in the same local network. When sending the handover request, the source H(e)NB may further carry the identifier of the target H(e)NB, so that the MME/SGSN knows the identifier of the target H(e)NB. The identifier of the source H(e)NB may be obtained, in a manner similar to the foregoing manner for obtaining the CSG ID of the source H(e)NB, in a process of establishing a connection between the UE and the source H(e)NB, or may also be obtained from a handover request of the source home base station that is used as a target base station, which is not repeatedly described here. An H(e)NB identifier list not only may be saved on the MME/SGSN but also may be saved on the HSS, and for a specific process of obtaining the H(e)NB identifier list, reference may be made to the foregoing description of the CSG ID list, which is not repeatedly described here.

S203: If yes, send, to the target home base station, connection establishment related information of an L-GW to which the target home base station connects.

It should be noted that, although an interface exists between the target H(e)NB and a corresponding L-GW, when a certain terminal needs to perform local IP access through a link H(e)NB->L-GW, a process of mutual discovery between the two needs to be first completed, which is equivalent to activation of a process of establishing a user-plane tunnel, and then transmission of user data can be completed through the tunnel. The mutual discovery between the two is notifying each other of their respective connection establishment related information (which may include their respective addresses and/or tunnel endpoint identifiers TEIDs).

Specifically, after receiving the handover request sent by the source H(e)NB, the MME/SGSN may first obtain the L-GW to which the target H(e)NB connects. Correspondence between H(e)NBs and L-GWs may be saved in the MME/SGSN; therefore, the MME/SGSN may directly know, by querying the saved correspondence between H(e)NBs and L-GWs, the L-GW to which the target H(e)NB connects.

How to save the correspondence between H(e)NBs and L-GWs in the MME/SGSN is briefly introduced in the following. In a process of establishing a PDN connection by a terminal, an H(e)NB first initiates a connection request to the MME/SGSN, the MME/SGSN selects, for the terminal and according to service instruction information carried in the connection request initiated by the terminal, a load status of the L-GW and so on, an L-GW (this is for a case that multiple L-GWs exist, and if only one L-GW exists, the L-GW is directly selected) that performs a local IP service, the L-GW sends its own connection establishment related information (including an address and/or a tunnel endpoint identifier, and so on) in a local network to the MME/SGSN in a subsequent procedure, and the H(e)NB also sends its own connection establishment related information (including an IP address, a tunnel endpoint identifier TEID used in an interface between the H(e)NBs and/or the LGW, and so on) to the MME/SGSN, and the connection establishment related information of the two is notified to each other through a subsequent signaling procedure. In this way, a connection between the H(e)NB and the L-GW can be established, and meanwhile, the MME/SGSN saves it.

In short, for each H(e)NB, as long as a UE (which may not be a UE that currently initiates a handover request, and may be any UE in a network) previously establishes a PDN connection through the H(e)NB, correspondence between the H(e)NB and an L-GW may be saved on the MME/SGSN, and connection establishment related information of the L-GW is saved (connection establishment related information of the H(e)NB is not saved in the MME). Therefore, after the handover request is received, the saved correspondence between H(e)NBs and L-GWs may be directly queried, so as to determine the L-GW to which the target H(e)NB connects and obtain the connection establishment related information of the L-GW from the saved information.

After the connection establishment related information of the L-GW corresponding to the target H(e)NB is obtained, the information may be sent to the target H(e)NB. At this point, the target H(e)NB discovers the L-GW corresponding to the target H(e)NB.

S204: After the connection establishment related information of the L-GW to which the target home base station connects is sent to the target home base station, receive connection establishment related information of the target home base station sent by the target home base station, send the connection establishment related information of the target home base station to the L-GW to which the target home base station connects, and establish a user-plane tunnel between the target home base station and the connected L-GW.

After receiving the connection establishment related information of the connected L-GW, the target H(e)NB may return a response to the MME/SGSN and carry its own connection establishment related information, which is equivalent to that the MME/SGSN knows the connection establishment related information of the target H(e)NB. After receiving the response returned by the target H(e)NB, the MME/SGSN may send a handover instruction to the source H(e)NB, and then the source H(e)NB sends a handover instruction to the UE. After receiving the handover instruction, the UE may send a handover acknowledgment message to the target H(e)NB, and the target H(e)NB may send a handover notification message to the MME/SGSN. Then, the MME/SGSN may send the previously obtained connection establishment related information of the target H(e)NB to the L-GW corresponding to the target H(e)NB. It should be noted that, because in a protocol, an interface may not exist between the MME/SGSN and the L-GW, a notification process may be relayed by an S-GW in a network. That is, the MME/SGSN may first send the connection establishment related information of the L-GW corresponding to the target H(e)NB to the S-GW, and the S-GW forwards the information to the target L-GW. At this point, the L-GW discovers the target H(e)NB. In the foregoing steps, the target H(e)NB already discovers the corresponding L-GW, which is equivalent to that the mutual discovery between the two is implemented. In this way, the user-plane tunnel between the two may be established, and the UE may perform data transmission by using the established user-plane tunnel.

It can be seen that, in the embodiment of the present invention, after the handover request is received, the mutual discovery of the target H(e)NB and the corresponding L-GW can be completed; therefore, the user-plane tunnel between the target H(e)NB and the L-GW can be established for the UE that initiates the handover. In a case that only one L-GW exists in the network, or in a case that multiple L-GWs exist in the network but an L-GW corresponding to the source H(e)NB and an L-GW corresponding to the target H(e)NB are the same one, because the corresponding L-GW does not change before and after the handover, reallocation of an IP address does not occur, and correspondingly, an IP address of the UE also does not change. In this way, as long as in a process that a current connection exists, the mutual discovery of the target H(e)NB and the corresponding L-GW is implemented and the tunnel between the two is established, continuity of an LIPA IP data session in the handover process may be ensured.

However, in a case that multiple L-GWs exist in the network and an L-GW corresponding to the source H(e)NB and an L-GW corresponding to the target H(e)NB are different, if no special processing is performed, the LGW corresponding to the target H(e)NB reallocates an IP address to the UE. In this way, an ongoing service using an original IP address is interrupted, and a connection is re-established by using a new IP address, which apparently does not meet a requirement for handover continuity.

Therefore, in the embodiment of the present invention, after that the source H(e)NB and the target H(e)NB are in the same local network is determined, whether the L-GW to which the target H(e)NB connects and the L-GW to which the source H(e)NB connects are the same may be further determined, and if no, that is, L-GWs corresponding to the H(e)NBs before and after the handover are different, an IP address allocated by the source H(e)NB to the UE further needs to be notified to the L-GW corresponding to the target H(e)NB. In this way, the L-GW corresponding to the target H(e)NB does not reallocate an IP address to the UE, and still uses the IP address allocated by the source H(e)NB to the UE, and continuously performs the local IP access for the UE through the established user-plane tunnel between the target H(e)NB and the corresponding L-GW.

That is to say, the original IP is still used after the handover, and only the user-plane tunnel is changed. After the handover is completed, the UE still uses the original IP address to perform data transmission. In other words, before and after the handover, the IP address of the UE is not changed, and only a network element that bears the local IP service of the UE is changed. In the process, the local IP service is not interrupted, thereby ensuring the continuity of the LIPA IP data session in the handover process.

It should be noted that, if multiple L-GWs exist in the same local network, coordination is generally performed between the L-GWs, so as to ensure that IP addresses allocated to UEs do not collide between different L-GWs, and meanwhile, ensure coordination and unification of IP address management of different LGWs so that an LGW after the handover does not manage an IP address allocated by an LGW before the handover. Therefore, after the UE is handed over to the target H(e)NB, if the UE continuously uses an IP address allocated by the source H(e)NB to the UE, the UE does not collide with another UE under the target H(e)NB over IP addresses.

To better understand the foregoing method for performing a handover between H(e)NBs provided by the embodiment of the present invention, an example is taken to describe an implementation procedure in an actual application with reference to specific network elements in the following.

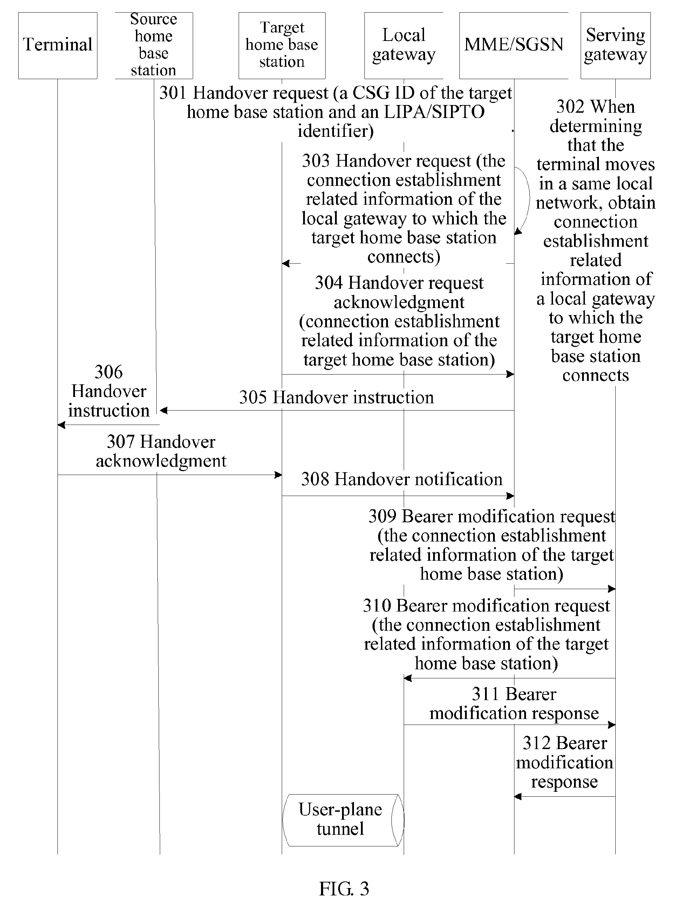

Referring to FIG. 3, first, it is assumed that there are only one L-GW in a network, and it is assumed that whether a source H(e)NB and a target H(e)NB are in a same local network is determined through a CSGID. The procedure is as follows:
S301: A source H(e)NB sends a handover request message (Handover Required) to an MME/SGSN, where the message carries at least a CSG ID of a target H(e)NB, an H(e)NB ID of the target H(e)NB, a local network identifier LN ID of the target H(e)NB, and an LIPA/SIPTO indicator.

The LIPA/SIPTO indicator indicates that a bearer of an LIPA/SIPTO service needs to be handed over. Because another non-local IP connection may exist at the same time, the MME/SGSN may accordingly know that a local IP connection bearer needs to be handed over. Definitely, if a local IP connection is performed only through an H(e)NB, the identifier may also not be carried.

S302: The MME/SGSN determines, by querying a CSG ID list of a local network that is pre-saved or obtained from an HSS, that the source H(e)NB and the target H(e)NB are in a same local network. The MME/SGSN may also compare an LN ID of the source H(e)NB and the LN ID of the target H(e)NB, and determine that the two belong to the same local network when the LN IDs of the source and target H(e)NBs are the same. The MME/SGSN may also query correspondence which is between local network LN IDs and H(e)NB IDs and pre-saved or obtained from the HSS, and if the source and target H(e)NB IDs belong to a same LN ID, the two belong to the same local network. Whether a UE moves in the same local network is determined through the foregoing several methods.

If yes, an L-GW to which the target H(e)NB connects and connection establishment related information of the L-GW are determined, and step S303 is entered. Definitely, in the example, the L-GW to which the target H(e)NB connects and an L-GW to which the source H(e)NB connects are the same one.

S303: The MME/SGSN sends a handover request message (Handover Request) to the target H(e)NB, where the message carries the connection establishment related information of the L-GW to which the target H(e)NB connects, so that the target H(e)NB discovers the L-GW corresponding to the target H(e)NB.

S304: The target H(e)NB sends a handover request acknowledgment message (Handover Request ACK) to the MME/SGSN, where the message carries connection establishment related information of the target H(e)NB.

S305: The MME/SGSN sends a handover instruction message (Handover Command) to the source H(e)NB.

S306: The source H(e)NB sends a handover instruction message (Handover Command) to the UE.

S307: The UE sends a handover acknowledgment message (Handover Confirm) to the target H(e)NB.

S308: The target H(e)NB sends a handover notification message (Handover Notify) to the MME/SGSN.

S309: The MME/SGSN sends a bearer modification request (Modify Bearer Request) to an S-GW, where the request carries the connection establishment related information of the target H(e)NB.

S310: The S-GW sends a bearer modification request (Modify Bearer Request) to the L-GW, where the request carries the connection establishment related information of the target H(e)NB, so that the L-GW discovers the target H(e)NB.

S311: The L-GW returns a bearer modification response message (Modify Bearer Response) to the S-GW.

S312: The S-GW returns a bearer modification response message (Modify Bearer Response) to the MME/SGSN.

At this point, establishment of a user-plane tunnel between the target H(e)NB and the L-GW is completed, and the UE may be handed over to the user-plane tunnel to complete local IP access.

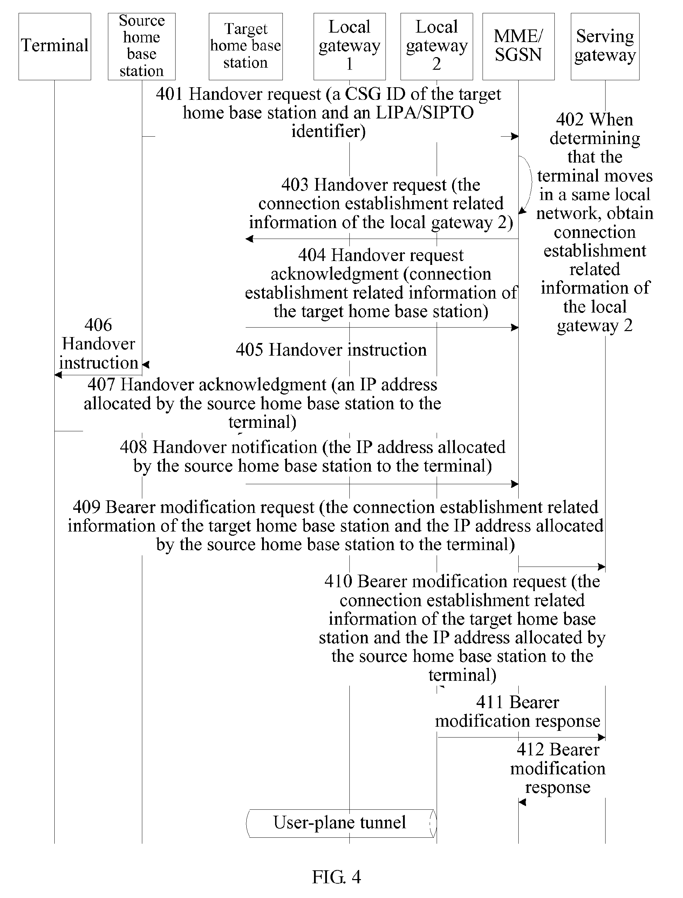

Referring to FIG. 4, when multiple L-GWs exist in a network, and an L-GW corresponding to a source H(e)NB and an L-GW corresponding to a target H(e)NB are different, a handover procedure may be performed as follows:
S401 is the same as step S301.
S402: The MME/SGSN determines, by querying a CSG ID list of a local network that is pre-saved or obtained from an HSS, that the source H(e)NB and the target H(e)NB are in a same local network. The MME/SGSN may also compare an LN ID of the source H(e)NB and the LN ID of the target H(e)NB, and determine that the two belong to the same local network when the LN IDs of the source and target H(e)NBs are the same. The MME/SGSN may also query correspondence which is between local network LN IDs and H(e)NB IDs and pre-saved or obtained from the HSS, and if the source and target H(e)NB IDs belong to a same LN ID, the two belong to the same local network. Whether a UE moves in the same local network is determined through the foregoing several methods.

If yes, an L-GW to which the target H(e)NB connects and connection establishment related information of the L-GW are determined, and step S303 is entered. In the example, the L-GW to which the target H(e)NB connects and an L-GW to which the source H(e)NB connects are different, and for convenience of description, the L-GW to which the source H(e)NB connects is called an L-GW1, and the L-GW to which the target H(e)NB connects is called an L-GW2.

S403: The MME/SGSN sends a handover request message (Handover Request) to the target H(e)NB, where the message carries connection establishment related information of the L-GW2, so that the target H(e)NB discovers the L-GW2 corresponding to the target H(e)NB.

S404 to S406 are the same as S304 to S306.

S407: The UE sends a handover acknowledgment message (Handover Confirm) to the target H(e)NB and carries, in the handover acknowledgment message, an IP address allocated by the source H(e)NB to the UE.

S408: The target H(e)NB sends a handover notification message (Handover Notify) to the MME/SGSN and carries, in the handover notification message, the IP address allocated by the source H(e)NB to the UE.

S409: The MME/SGSN sends a bearer modification request (Modify Bearer Request) to an S-GW, where the request carriers the connection establishment related information of the target H(e)NB and the IP address allocated by the source H(e)NB to the UE.

S410: The S-GW sends a bearer modification request (Modify Bearer Request) to the L-GW2, where the request carries the connection establishment related information of the target H(e)NB and the IP address allocated by the source H(e)NB to the UE, so that the L-GW2 discovers the target H(e)NB and the L-GW2 knows an IP address allocated by the L-GW1 to the UE. In this way, the L-GW2 does not allocate an IP address to the UE.

S411: The L-GW2 returns a bearer modification response message (Modify Bearer Response) to the S-GW.

S412: The S-GW returns a bearer modification response message (Modify Bearer Response) to the MME/SGSN.

At this point, establishment of a user-plane tunnel between the target H(e)NB and the L-GW2 is completed, and the UE may be handed over to the user-plane tunnel to complete local IP access and still uses the IP address before the handover. Therefore, continuity of an LIPA IP data session in the handover process can be ensured.

In the method of the foregoing embodiment, relevant steps such as receiving the handover request, determining whether the source H(e)NB and the target H(e)NB are in the same local network, the mutual discovery of the target H(e)NB and the connected L-GW, and in a case that the L-GW to which the source H(e)NB connects and the L-GW to which the target H(e)NB connects are different, sending the IP address allocated by the source H(e)NB to the UE to the L-GW to which the target H(e)NB connects are completed by the MME/SGSN, so the steps may be implemented on the basis of existing network architecture.

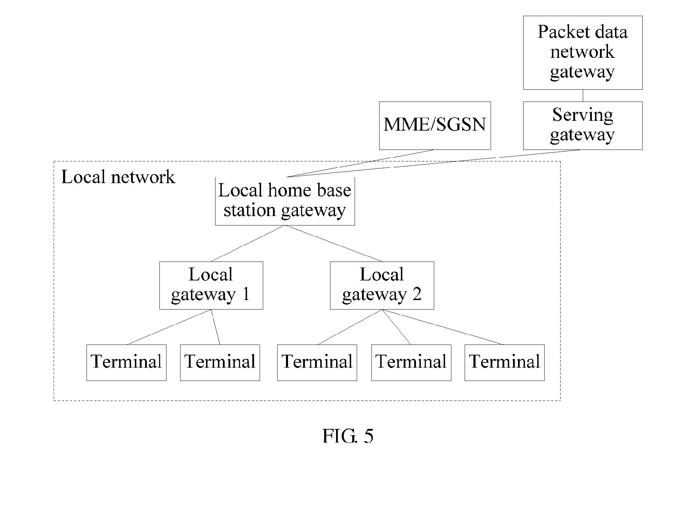

In other embodiments of the present invention, existing network architecture may also be first transformed. Specifically, as shown in FIG. 5, one network element, a local home base station H(e)NB gateway, may be added in a network, and the local H(e)NB gateway is configured between an original L-GW and an MME/SGSN. There may be one or more (two shown in FIG. 5) L-GWs, and each L-GW may be connected to multiple H(e)NBs. In other words, an H(e)NB may be connected to the local H(e)NB gateway through an L-GW to which the H(e)NB connects.

In this case, functions of an MME/SGSN and an L-GW in original network architecture are aggregated in the local H(e)NB gateway, that is, in one aspect, mobility management is performed on a UE in a local network, which includes receiving a connection establishment request and a handover request of a base station, and so on, and in another aspect, an IP address used by a UE that resides in the local network may be uniformly configured by the local H(e)NB gateway. Correspondingly, the L-GW functions as a common router, and performs relaying between an H(e)NB and the local H(e)NB gateway.

In the transformed network architecture, a handover between H(e)NBs may also be implemented by using the foregoing method, and a difference only lies in that, an execution subject of each step is the local H(e)NB gateway. That is to say, when a handover needs to be performed, a source H(e)NB may send a handover request to the local H(e)NB gateway, and the local H(e)NB gateway determines whether the source H(e)NB and a target H(e)NB are in a same local network, completes mutual discovery between the target H(e)NB and a connected L-GW, and establishes a user-plane tunnel between the target H(e)NB and the connected L-GW.

It should be noted that, in the transformed network architecture, although an L-GW does not have a function such as allocating an IP address, when the user-plane tunnel is established, the tunnel is still established between the target H(e)NB and the connected L-GW. A connection between the L-GW and the local H(e)NB gateway may be established through a relationship between routers, which may be ignored in the handover process.

In addition, it should be noted that, in the transformed network architecture, because IP addresses of the UE are uniformly allocated by the local H(e)NB gateway, when a handover between different H(e)NBs is performed, even though L-GWs to which H(e)NBs connect before and after the handover are different, a problem of IP address reallocation is not involved. In this way, in the handover process, only the mutual discovery between the target H(e)NB and the connected L-GW and the establishment of the user-plane tunnel need to be completed, so that continuity of an LIPA IP data session in the handover process can be implemented, thereby simplifying a signaling interaction procedure.

In addition, it should be noted that, when the local H(e)NB gateway determines whether the source H(e)NB and the target H(e)NB are in the same local network, the foregoing method may also be used, that is, the judgment is performed through a CSG ID, a local network identifier, an H(e)NB identifier, and so on. For a specific implementation manner, reference may be made to the foregoing description, which is not repeatedly described here.

Definitely, during specific implementation, a case that an H(e)NB is directly connected to the local H(e)NB gateway may also exist, and relaying of an L-GW is not needed. That is, in the network architecture as shown in FIG. 5, an L-GW layer may also not exist, and only one local H(e)NB gateway exists. In this case, if the continuity of the LIPA IP data session in the handover process needs to be ensured, only the mutual discovery of the target H(e)NB and the local H(e)NB gateway and the establishment of the user-plane tunnel between the two need to be performed. In this case, because no matter which H(e)NB is the target H(e)NB, one endpoint of the user-plane tunnel is certainly the local H(e)NB gateway itself, and meanwhile, because the local H(e)NB gateway also receives the handover request, after receiving the handover request, the local H(e)NB gateway directly sends its own connection establishment related information to the target H(e)NB. In this way, the target H(e)NB discovers the local H(e)NB gateway, and then after receiving connection establishment related information returned by the target H(e)NB, the local H(e)NB gateway discovers the target H(e)NB, so that the user-plane tunnel between the target H(e)NB and the local H(e)NB gateway may be established.

To better understand the specific method for performing a handover between H(e)NBs in the foregoing transformed network architecture, an example is taken for description through an implementation procedure in an actual application in the following.

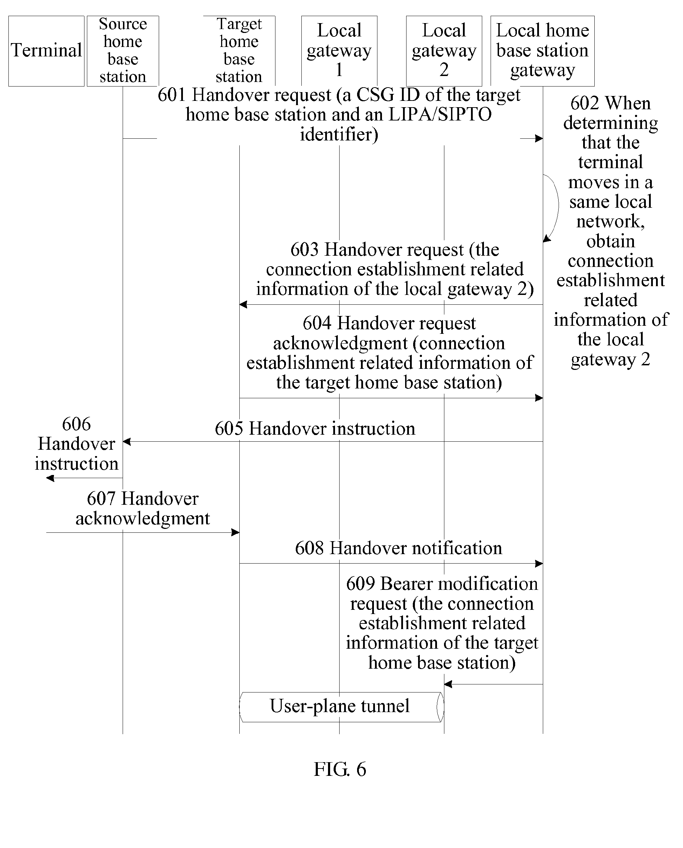

Referring to FIG. 6, it is assumed that an L-GW layer exists in transformed network architecture, a specific handover process is as follows:
S601: A source H(e)NB sends a handover request message (Handover Required) to a local H(e)NB gateway, where the message carries at least a CSG ID of a target H(e)NB, an H(e)NB ID of the target H(e)NB, a local network identifier LN ID of the target H(e)NB, and an LIPA/SIPTO indicator.
S602: The local H(e)NB gateway determines, by querying a CSG ID list of a local network, whether the source H(e)NB and the target H(e)NB are in a same local network. The local H(e)NB gateway may also compare an LN ID of the source H(e)NB and the LN ID of the target H(e)NB, and determine that the two belong to the same local network when the LN IDs of the source and target H(e)NBs are the same. The local H(e)NB gateway may also query correspondence between local network LN IDs and H(e)NB IDs, and if the source and target H(e)NB IDs belong to a same LN ID, the two belong to the same local network. Whether a UE moves in the same local network is determined through the foregoing several methods.

If yes, an L-GW to which the target H(e)NB connects and connection establishment related information of the L-GW are determined, and step S303 is entered. If it is determined that the source H(e)NB and the target H(e)NB are not in the same local network, the handover request may be directly forwarded to an MME/SGSN for processing.

In the example, it is assumed that the L-GW to which the target H(e)NB connects and an L-GW to which the source H(e)NB connects are different, and it is assumed that the L-GW to which the source H(e)NB connects is an L-GW1, and the L-GW to which the target H(e)NB connects is an L-GW2.

S603: The local H(e)NB gateway sends a handover request message (Handover Request) to the target H(e)NB, where the message carries connection establishment related information of the L-GW2, so that the target H(e)NB discovers the L-GW corresponding to the target H(e)NB.

S604: The target H(e)NB sends a handover request acknowledgment message (Handover Request ACK) to the local H(e)NB gateway, where the message carries connection establishment related information of the target H(e)NB.

S605: The local H(e)NB gateway sends a handover instruction message (Handover Command) to the source H(e)NB.

S606: The source H(e)NB sends a handover instruction message (Handover Command) to the UE.

S607: The UE sends a handover acknowledgment message (Handover Confirm) to the target H(e)NB.

S608: The target H(e)NB sends a handover notification message (Handover Notify) to the local H(e)NB gateway.

S609: The local H(e)NB gateway sends a bearer modification request (Modify Bearer Request) to the L-GW2, where the request carries the connection establishment related information of the target H(e)NB, so that the L-GW2 discovers the target H(e)NB.

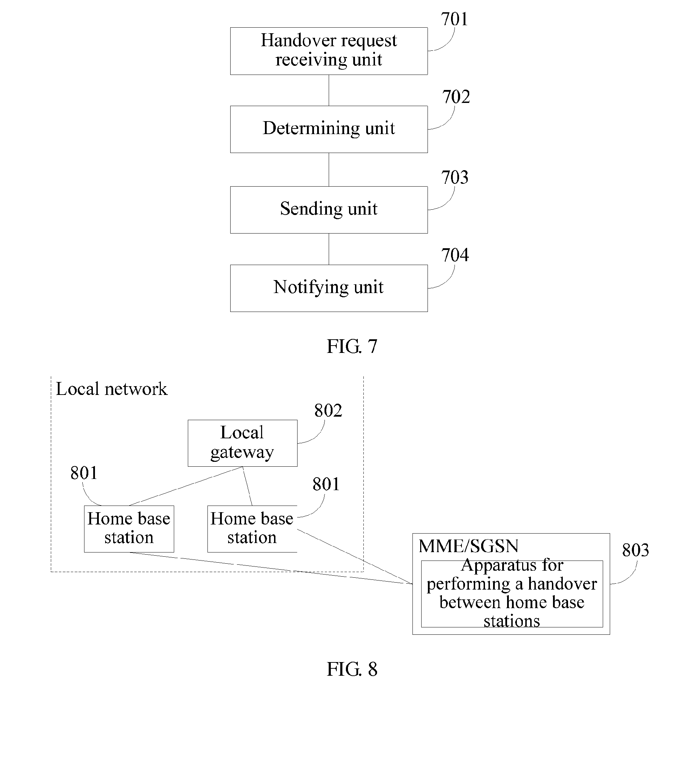

At this point, establishment of a user-plane tunnel between the target H(e)NB and the L-GW2 is completed, and the UE may be handed over to the user-plane tunnel to complete local IP access. Corresponding to the method for performing a handover between home base stations provided by the embodiment of the present invention, an embodiment of the present invention further provides an apparatus for performing a handover between home base stations. Referring to FIG. 7, the apparatus may include:
a handover request receiving unit 701, configured to receive a handover request for a handover to a target home base station, where the handover request is sent by a source home base station;
a determining unit 702, configured to determine whether the source home base station and the target home base station are in a same local network;
a sending unit 703, configured to: if a judgment result of the determining unit is yes, send, to the target home base station, connection establishment related information of an L-GW to which the target home base station connects; and
a notifying unit 704, configured to: after the connection establishment related information of the L-GW to which the target home base station connects is sent to the target home base station, receive connection establishment related information of the target home base station sent by the target home base station, send the connection establishment related information of the target home base station to the L-GW to which the target home base station connects, and establish a user-plane tunnel between the target home base station and the connected L-GW.

During specific implementation, there are multiple methods for determining whether the source H(e)NB and the target H(e)NB are in the same local network. In one manner, the judgment may be implemented through a CSG ID of an H(e)NB. In this case, a CSG ID of the target H(e)NB may be further carried in the handover request sent by the source H(e)NB, and correspondingly, the determining unit 702 may include:
a first determining subunit, configured to: if a CSG ID of the source H(e)NB and the CSG ID of the target H(e)NB are in a CSG ID list which is in the same local network and preset or obtained from an HSS, determine that the source H(e)NB and the target H(e)NB are in the same local network, where the CSG ID of the source home base station is obtained in a process of establishing a connection between a UE and the source home base station, or is obtained from a handover request of the source home base station that is used as a target base station.

Alternatively, in another manner, the judgment may be implemented through an identifier of a local network where an H(e)NB is located. In this case, an identifier of a local network where the source H(e)NB is located may be further carried in the handover request sent by the source H(e)NB, and correspondingly, the determining unit 702 may include:
a second determining subunit, configured to: if the identifier of the local network where the source H(e)NB is located and an identifier of a local network where the target H(e)NB is located are the same, determine that the source H(e)NB and the target H(e)NB are in the same local network.

A local network identifier of the target H(e)NB is obtained in any one of the following manners: obtaining by querying a DNS domain name server, or obtaining in a process of establishing a connection between another UE and the target H(e)NB, or obtaining by querying an H(e)NB and local network identifier list, or obtaining from an S1 application protocol message S1 AP sent by the target H(e)NB, or obtaining from a handover request initiated by the target H(e)NB as a source H(e)NB, and so on.

In still another manner, the judgment may be further implemented through an identifier of an H(e)NB and an H(e)NB identifier list of a same local network that is pre-established or obtained from the HSS. In this case, an identifier of the target H(e)NB may be further carried in the handover request sent by the source H(e)NB, and correspondingly, the determining unit 702 may include:
a third determining subunit, configured to: if an identifier of the source H(e)NB and the identifier of the target H(e)NB are in an H(e)NB identifier list of a same local network identifier, that the source H(e)NB and the target H(e)NB are in the same local network, where the identifier of the source home base station is obtained in a process of establishing a connection between the UE and the source home base station, or is obtained from a handover request of the source home base station that is used as a target base station.

When the L-GW to which the target H(e)NB connects and an L-GW to which the source H(e)NB connects are different, some special processing may be further performed. In this case, the apparatus may further include:
a gateway information determining unit, configured to: if a judgment result of the determining unit 702 is yes, determine whether the L-GW to which the target home base station connects and the L-GW to which the source home base station connects are the same; and
an IP address sending unit, configured to: if a judgment result of the gateway information determining unit is no, send, to the L-GW to which the target H(e)NB connects, an IP address allocated, to a terminal, by the L-GW to which the source H(e)NB connects, so that the IP address is continuously used to perform local IP access after the handover.

During specific implementation, the sending unit 703 may include:
an information determining subunit, configured to determine the connection establishment related information of the local gateway L-GW to which the target H(e)NB connects; and
a sending subunit, configured to send, to the target H(e)NB, the connection establishment related information of the L-GW to which the target H(e)NB connects.

In the foregoing apparatus provided by the embodiment of the present invention, after the handover request sent by the source home base station is received, whether the source H(e)NB and the target H(e)NB are in the same local network can be determined, and if yes, mutual discovery of the target H(e)NB and the connected L-GW may be implemented, that is, the target H(e)NB and the connected L-GW can know the connection establishment related information of each other, so that the user-plane tunnel may be established between the target H(e)NB and the connected L-GW, and then the local IP access of the terminal is completed by directly using the established user-plane tunnel, so as to ensure continuity of an LIPA IP data session in the handover process. Corresponding to the method and the apparatus for performing a handover between home base stations provided by the embodiments of the present invention, an embodiment of the present invention further provides a system for performing a handover between home base stations. Referring to FIG. 8, the system may include:
at least two home base stations 801, at least one local gateway L-GW 802 and an MME/SGSNSGSN 803, where the MME/SGSN includes the foregoing apparatus for performing a handover between home base stations.

The system may be directly implemented on the basis of existing network architecture.

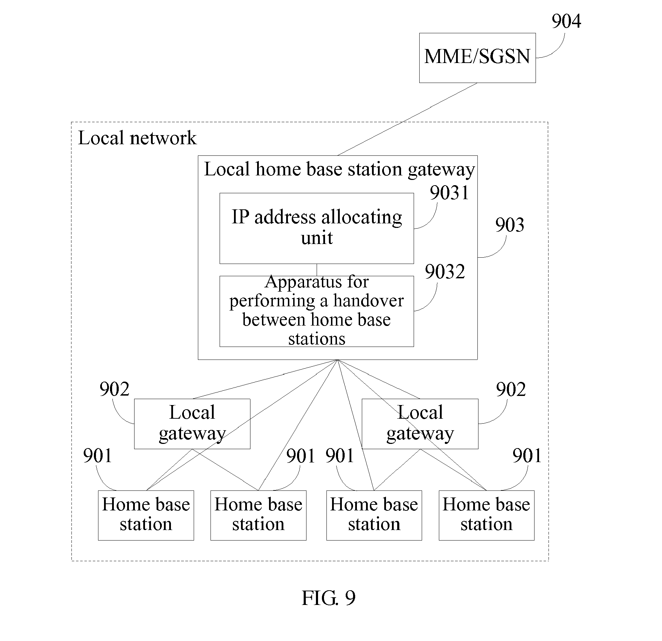

Corresponding to the method and the apparatus for performing a handover between home base stations provided by the embodiments of the present invention, an embodiment of the present invention further provides another system for performing a handover between home base stations. Referring to FIG. 9, the system may include:
at least two home base stations 901, at least one local gateway L-GW 902, a local home base station gateway 903, and an MME/SGSN 904, where the local home base station gateway includes:
   an IP address allocating unit 9031, configured to: when a request for establishing a local IP service connection for a terminal is received, allocate an IP address to the terminal; and
   the apparatus 9032 for performing a handover between home base stations, where when the local home base station gateway 903 determines that the source H(e)NB and the target H(e)NB are not in a same local network, the local home base station gateway 903 may send a handover request to the MME/SGSN.

It should be noted that, in the system as shown in FIG. 9, because IP address reallocation is not involved before and after the handover, the apparatus for performing a handover between home base stations may not include the foregoing IP address sending unit.

The foregoing apparatus and system embodiments are introduced on the basis of the foregoing method embodiments, and for a part not described in detail in the apparatus and system embodiments, reference may be made to the description of the method embodiments, which is not repeatedly described here.

Persons of ordinary skill in the art should understand that, all or part of the steps of the method of the foregoing embodiments may be implemented by a program instructing relevant hardware. The program may be stored in a computer readable storage medium. When the program is executed, the following steps are included: receiving a handover request for a handover to a target home base station, where the handover request is sent by a source home base station; determining whether the source home base station and the target home base station are in a same local network; if yes, sending, to the target home base station, connection establishment related information of an L-GW to which the target home base station connects; and after sending, to the target home base station, the connection establishment related information of the L-GW to which the target home base station connects, receiving connection establishment related information of the target home base station sent by the target home base station, sending the connection establishment related information of the target home base station to the L-GW to which the target home base station connects, and establishing a user-plane tunnel between the target home base station and the connected L-GW. The storage medium may be a ROM/RAM, a magnetic disk, an optical disk, and so on.

The method, apparatus, and system for performing a handover between home base stations provided by the present invention are described in detail in the foregoing. The principle and implementation manners of the present invention are described through specific examples here. The foregoing description of the embodiments is merely used to help understanding of the method and core ideas of the present invention. Meanwhile, persons of ordinary skill in the art may make modifications to the specific implementation manners and application scope according to the ideas of the present invention. To sum up, content of the specification should not be construed as a limitation to the present invention.

## Claims

1. A method for performing a handover between home base stations, comprising:
receiving a handover request for a handover to a target home base station, wherein the handover request is sent by a source home base station;
determining whether the source home base station and the target home base station are in a same local network;
if yes, sending, to the target home base station, connection establishment related information of an L-GW to which the target home base station connects; and
after sending, to the target home base station, the connection establishment related information of the L-GW to which the target home base station connects, receiving connection establishment related information of the target home base station sent by the target home base station, sending the connection establishment related information of the target home base station to the L-GW to which the target home base station connects, and establishing a user-plane tunnel between the target home base station and the connected L-GW.

2. The method according to claim 1, wherein the handover request sent by the source home base station further carries a closed subscriber group CSG ID of the target home base station; and
the determining whether the source home base station and the target home base station are in the same local network comprises:
if a CSG ID of the source home base station and the CSG ID of the target home base station belong to a CSG ID list in the same local network, determining that the source home base station and the target home base station are in the same local network, wherein the CSG ID of the source home base station is obtained in a process of establishing a connection between a UE and the source home base station, or is obtained from a handover request of the source home base station that is used as a target base station.

3. The method according to claim 1, wherein the handover request sent by the source home base station further carries a local network identifier of the source home base station; and
the determining whether the source home base station and the target home base station are in the same local network comprises:
if the local network identifier of the source home base station and a local network identifier of the target home base station are the same, determining that the source home base station and the target home base station are in the same local network, wherein
the local network identifier of the target home base station is obtained in any one of the following manners: obtaining by querying a DNS domain name server, or obtaining in a process of establishing a connection between another UE and the target home base station, or obtaining by querying an identifier list of home base stations and local networks, or obtaining from an S1 application protocol message S1 AP sent by the target home base station, or obtaining from a handover request initiated by the target home base station that is used as a source home base station.

4. The method according to claim 1, wherein the handover request sent by the source home base station further carries an identifier of the target home base station; and
the determining whether the source home base station and the target home base station are in the same local network comprises:
if an identifier of the source home base station and the identifier of the target home base station belong to a home base station identifier list of a same local network identifier, determining that the source home base station and the target home base station are in the same local network, wherein the identifier of the source home base station is obtained in a process of establishing a connection between the UE and the source home base station, or is obtained from a handover request of the source home base station that is used as a target base station.

5. The method according to claim 1, wherein after the determining that the source home base station and the target home base station are in the same local network, the method further comprises:
determining whether the L-GW to which the target home base station connects and an L-GW to which the source home base station connects are the same; and
if no, sending, to the L-GW to which the target home base station connects, an IP address allocated, to a terminal, by the L-GW to which the source home base station connects, so that the IP address is continuously used to perform local IP access after the handover.

6. The method according to claim 1, wherein the connection establishment related information of the L-GW comprises:
an address of the L-GW and/or a tunnel endpoint identifier TEID used by an interface between the L-GW and a home base station; and
the connection establishment related information of the target home base station comprises:
an address of the target home base station and/or a TEID used by an interface between the target home base station and the L-GW.

7. The method according to claim 1, wherein the sending, to the target home base station, the connection establishment related information of the L-GW to which the target home base station connects comprises:
determining the connection establishment related information of the local gateway L-GW to which the target home base station connects; and
sending, to the target home base station, the connection establishment related information of the L-GW to which the target home base station connects.

8. An apparatus for performing a handover between home base stations, comprising:
a handover request receiving unit, configured to receive a handover request for a handover to a target home base station, wherein the handover request is sent by a source home base station;
a determining unit, configured to determine whether the source home base station and the target home base station are in a same local network;
a sending unit, configured to: if a judgment result of the determining unit is yes, send, to the target home base station, connection establishment related information of an L-GW to which the target home base station connects; and
a notifying unit, configured to: after the connection establishment related information of the L-GW to which the target home base station connects is sent to the target home base station, receive connection establishment related information of the target home base station sent by the target home base station, send the connection establishment related information of the target home base station to the L-GW to which the target home base station connects, and establish a user-plane tunnel between the target home base station and the connected L-GW.

9. The apparatus according to claim 8, wherein the handover request sent by the source home base station further carries a closed subscriber group CSG ID of the target home base station; and
the determining unit comprises:
a first determining subunit, configured to: if a CSG ID of the source home base station and the CSG ID of the target home base station belong to a CSG ID list in the same local network, determine that the source home base station and the target home base station are in the same local network, wherein the CSG ID of the source home base station is obtained in a process of establishing a connection between a UE and the source home base station, or is obtained from a handover request of the source home base station that is used as a target base station.

10. The apparatus according to claim 8, wherein the handover request sent by the source home base station further carries a local network identifier of the source home base station; and
the determining unit comprises:
a second determining subunit, configured to: if the local network identifier of the source home base station and a local network identifier of the target home base station are the same, determine that the source home base station and the target home base station are in the same local network, wherein
the local network identifier of the target home base station is obtained in any one of the following manners: obtaining by querying a DNS domain name server, or obtaining in a process of establishing a connection between another UE and the target home base station, or obtaining by querying an identifier list of home base stations and local networks, or obtaining from an S1 application protocol message S1 AP sent by the target home base station, or obtaining from a handover request initiated by the target home base station that is used as a source home base station.

11. The apparatus according to claim 8, wherein the handover request sent by the source home base station further carries an identifier of the target home base station; and
the determining unit comprises:
a third determining subunit, configured to: if an identifier of the source home base station and the identifier of the target home base station belong to a home base station identifier list of a same local network identifier, determine that the source home base station and the target home base station are in the same local network, wherein the identifier of the source home base station is obtained in a process of establishing a connection between the UE and the source home base station, or is obtained from a handover request of the source home base station that is used as a target base station.

12. The apparatus according to claim 8, further comprising:
a gateway information determining unit, configured to: if a judgment result of the determining unit is yes, determine whether the L-GW to which the target home base station connects and an L-GW to which the source home base station connects are the same; and
an IP address sending unit, configured to: if a judgment result of the gateway information determining unit is no, send, to the L-GW to which the target home base station connects, an IP address allocated, to a terminal, by the L-GW to which the source home base station connects, so that the IP address is continuously used to perform local IP access after the handover.

13. The apparatus according to claim 8, wherein the sending unit comprises:
an information determining subunit, configured to determine the connection establishment related information of the local gateway L-GW to which the target home base station connects; and
a sending subunit, configured to send, to the target home base station, the connection establishment related information of the L-GW to which the target home base station connects.

14. A system for performing a handover between home base stations, comprising at least two home base stations, at least one local gateway L-GW, and a mobility management entity MME/serving GPRS support node SGSN, wherein
the MME/SGSN comprises the apparatus for performing a handover between home base stations according to any one of claims 8 to 13.

15. A system for performing a handover between home base stations, comprising at least two home base stations, at least one local gateway L-GW, a local home base station gateway, and a mobility management entity MME/serving GPRS support node SGSN, wherein
the local home base station gateway comprises:
an IP address allocating unit, configured to: when a request for establishing a local IP service connection for a terminal is received, allocate an IP address to the terminal; and
the apparatus for performing a handover between home base stations according to any one of claims 8 to 11 and claim 13.
